(19) 

**Europäisches Patentamt**
**European Patent Office**
**Office européen des brevets**

(11) **EP 4 530 119 A1**

(12) **EUROPEAN PATENT APPLICATION**
published in accordance with Art. 153(4) EPC

(43) Date of publication:
**02.04.2025 Bulletin 2025/14**

(21) Application number: **23806851.4**

(22) Date of filing: **12.05.2023**

(51) International Patent Classification (IPC):
***B60L 15/20*** (2006.01)

(52) Cooperative Patent Classification (CPC):
**B60L 15/20; B60L 15/28;** Y02T 10/72

(86) International application number:
**PCT/CN2023/093983**

(87) International publication number:
**WO 2023/221899 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.05.2022 CN 202210552589**

(71) Applicant: **BYD Company Limited
Shenzhen, Guangdong 518118 (CN)**

(72) Inventors:
• **LING, Heping
Shenzhen, Guangdong 518118 (CN)**

• **SHI, Mingchuan
Shenzhen, Guangdong 518118 (CN)**
• **ZHANG, Hao
Shenzhen, Guangdong 518118 (CN)**
• **YIN, Chao
Shenzhen, Guangdong 518118 (CN)**
• **WANG, Hongxia
Shenzhen, Guangdong 518118 (CN)**

(74) Representative: **Mathys & Squire
The Shard
32 London Bridge Street
London SE1 9SG (GB)**

(54) **VEHICLE TORQUE CONTROL METHOD AND APPARATUS, ELECTRONIC DEVICE, AND STORAGE MEDIUM**

(57) A vehicle torque control method, comprising: step 101, acquiring the wheel speed of a wheel corresponding to a vehicle driver shaft, and according to the wheel speed of the wheel, calculating the equivalent rotating speed of a motor; step 102, acquiring the actual rotating speed of the motor corresponding to the driver shaft, and according to the equivalent rotating speed of the motor and the actual rotating speed of the motor corresponding to the driver shaft, calculating the equivalent rotating speed difference of the motor of the driver shaft to which the wheel is mounted; step 103, acquiring a corrected torque value according to the equivalent rotating speed difference of the motor of the driver shaft to which the wheel is mounted; and step 104, according to the corrected torque value, adjusting the output torque of the motor corresponding to the driver shaft. Also disclosed are a vehicle torque control apparatus, an electronic device, a storage medium, and a vehicle. The method reduces the difficulty of calculating the slip ratio. According to the state of the single wheel and the state of the single shaft, the torque of the motor of the driver shaft corresponding to a slipping wheel can be adjusted, and the adhesion utilization rate of the whole vehicle is improved, thereby improving the power performance of the whole vehicle, and avoiding the power loss caused by controlling torque reduction by means of the slip ratio.

FIG. 1

**Description**

## CROSS-REFERENCE TO RELATED APPLICATIONS

The present disclosure is provided based on Chinese Patent Application No. 202210552589.0 filed on May 20, 2022, and claims priority to the above Chinese Patent Application. The entire content of the above Chinese Patent Application is incorporated herein by reference.

## FIELD

The present disclosure relates to the technical field of vehicles, and specifically, to a vehicle torque control method and apparatus, an electronic device, and a storage medium.

## BACKGROUND

With the development of new energy vehicle technologies, requirements for safety and comfort of new energy vehicles are increasingly high. At present, most new energy vehicles are four-wheel drive vehicles, and each wheel can obtain power. Therefore, a response speed of a single wheel is relatively fast, and the wheel is susceptible to slip. In the related art, to solve this problem, whether the vehicle slips is generally determined by a slip ratio, so as to control the vehicle slip. However, a vehicle speed needs to be estimated when the slip ratio is calculated, which increases the difficulty of an algorithm.

## SUMMARY

In view of the above problems, embodiments of the present disclosure are proposed to provide a vehicle torque control method and apparatus, an electronic device, and a storage medium to overcome or at least partially solve the above problems.

To solve the above problems, an embodiment of the present disclosure discloses a vehicle torque control method. The method includes:

A wheel speed of a wheel corresponding to a vehicle drive shaft is acquired, and an equivalent rotating speed of a motor is calculated based on the wheel speed of the wheel.

An actual rotating speed of the motor corresponding to the drive shaft is acquired, and based on the equivalent rotating speed of the motor and the actual rotating speed of the motor corresponding to the drive shaft, an equivalent rotating speed difference of the motor of the drive shaft at which the wheel is located is calculated.

A corrected torque value is acquired based on the equivalent rotating speed difference of the motor of the drive shaft at which the wheel is located.

An output torque of the motor corresponding to the drive shaft is adjusted based on the corrected torque value.

In an embodiment, that based on the equivalent rotating speed of the motor and the actual rotating speed of the motor corresponding to the drive shaft, an equivalent rotating speed difference of the motor of the drive shaft at which the wheel is located is calculated includes:

A difference between the equivalent rotating speed of the motor and the actual rotating speed of the motor corresponding to the drive shaft is calculated to obtain the equivalent rotating speed difference of the motor of the drive shaft at which the wheel is located.

In an embodiment, that a corrected torque value is acquired based on the equivalent rotating speed difference of the motor of the drive shaft at which the wheel is located includes:

The corrected torque value is acquired if the equivalent rotating speed difference of the motor of the drive shaft at which the wheel is located is greater than a rotating speed difference threshold.

In an embodiment, that a corrected torque value is acquired based on the equivalent rotating speed difference of the motor of the drive shaft at which the wheel is located includes:

A wheel acceleration change rate of the wheel is acquired.

The corrected torque value is acquired if the equivalent rotating speed difference of the motor of the drive shaft at which the wheel is located is greater than the rotating speed difference threshold and the wheel acceleration change rate is greater than a wheel acceleration change rate threshold.

In an embodiment, that an output torque of the motor corresponding to the drive shaft is adjusted based on the corrected torque value includes:

The motor corresponding to the drive shaft is controlled to reduce the torque based on the corrected torque value.

In an embodiment, the drive shaft includes a front axle and a rear axle. That the motor corresponding to the drive shaft is controlled to reduce the torque based on the corrected torque value includes:

When an equivalent rotating speed difference of a motor corresponding to the front axle is greater than the rotating speed difference threshold, the motor of the front axle is controlled to reduce a torque based on the corrected torque value, or

when an equivalent rotating speed difference of a motor corresponding to the rear axle is greater than the rotating speed difference threshold, the motor of the rear axle is controlled to reduce a torque based on the corrected torque value, or

when equivalent rotating speed differences of motors corresponding to the front axle and the rear axle are both greater than the rotating speed difference threshold, the motors of the front axle and the rear axle are controlled to reduce torques based on the corrected torque value.

In an embodiment, that when an equivalent rotating speed difference of a motor corresponding to the front axle is greater than the rotating speed difference threshold, the motor of the front axle is controlled to reduce a torque based on the corrected torque value, or that when an equivalent rotating speed difference of a motor corresponding to the rear axle is greater than the rotating speed difference threshold, the motor of the rear axle is controlled to reduce a torque based on the corrected torque value includes:

When the equivalent rotating speed difference of the motor corresponding to the front axle is greater than the rotating speed difference threshold, the motor corresponding to the front axle is controlled to reduce the corrected torque value, and a rear axle torque incremental value increasable by the motor corresponding to the rear axle is determined; and if the rear axle torque incremental value is great than or equal to the corrected torque value, the motor corresponding to the rear axle is controlled to increase the corrected torque value, or if the rear axle torque incremental value is less than the corrected torque value, the motor corresponding to the rear axle is controlled to increase the torque based on the rear axle torque incremental value; or

when the equivalent rotating speed difference of the motor corresponding to the rear axle is greater than the rotating speed difference threshold, the motor corresponding to the rear axle is controlled to reduce the corrected torque value, and a front axle torque incremental value increasable by the motor corresponding to the front axle is determined; and if the front axle torque incremental value is great than or equal to the corrected torque value, the motor corresponding to the front axle is controlled to increase the corrected torque value, or if the front axle torque incremental value is less than the corrected torque value, the motor corresponding to the front axle is controlled to increase the torque based on the front axle torque incremental value.

In an embodiment, that an equivalent rotating speed of a motor is calculated based on the wheel speed of the wheel includes:

A transmission ratio of the wheel to the motor corresponding to the drive shaft is acquired.

The equivalent rotating speed of the motor is calculated based on the wheel speed of the wheel and the corresponding transmission ratio of the wheel.

In an embodiment, that a corrected torque value is acquired includes:

The corresponding corrected torque value is calculated based on the following formula:

$\triangle T_{fl} = k_1 * \triangle \omega_{fl} + k_2 * (\triangle \omega_{fl} - D_1)$, where $k_1$ and $k_2$ are a proportional coefficient and a differential coefficient, $D_1$ is an equivalent rotating speed difference of the motor corresponding to the drive shaft at a previous sampling time, $\triangle \omega_{fl}$ is an equivalent rotating speed difference of the motor corresponding to the drive shaft at a current time, and $\triangle T_{fl}$ is the corrected torque value.

In an embodiment, that a corrected torque value is acquired includes:

A corrected left wheel torque value corresponding to a left wheel connected to the drive shaft is acquired, and a corrected right wheel torque value corresponding to a right wheel connected to the drive shaft is acquired.

Magnitudes of the corrected left wheel torque value and the corrected right wheel torque value are determined, and the larger value is taken as the corrected torque value.

In an embodiment, that an output torque of the motor corresponding to the drive shaft is adjusted based on the corrected torque value includes:

A torque lower limit value is determined.

If a current output torque of the motor corresponding to the drive shaft is less than or equal to the torque lower limit value after the corrected torque value is reduced, the output torque of the motor corresponding to the drive shaft is controlled to be the torque lower limit value.

In an embodiment, that a torque lower limit value is determined includes:

It is determined that the torque lower limit value is 0 when the equivalent rotating speed difference of the motor corresponding to the drive shaft is greater than a first rotating speed difference threshold and less than a second rotating speed difference threshold. The second rotating speed difference threshold is greater than the first rotating speed difference threshold.

The torque lower limit value is determined as a torque limit value of motor reversal when the equivalent rotating speed difference of the motor corresponding to the drive shaft is greater than the second rotating speed difference threshold.

In another aspect, an embodiment of the present disclosure discloses a vehicle torque control apparatus, including:

an information acquisition module, configured to acquire a wheel speed of a wheel corresponding to a vehicle drive shaft, and acquire a rotating speed of a motor corresponding to the drive shaft;

a calculation module, configured to calculate an equivalent rotating speed based on the wheel speed of the wheel, and calculate, based on the rotating speed of the wheel and the rotating speed of the motor corresponding to the drive shaft, an equivalent rotating speed difference of the motor of the drive shaft at which the wheel is located;

a determining module, configured to acquire a corrected torque value based on the equivalent rotating speed difference of the motor of the drive shaft at which the wheel is located; and

a control module, configured to adjust an output torque of the motor corresponding to the drive shaft based on the corrected torque value.

In an embodiment, the calculation module includes:

an equivalent rotating speed difference calculation submodule, configured to calculate a difference between the equivalent rotating speed of the motor and the actual rotating speed of the motor corresponding to the drive shaft to obtain the equivalent rotating speed difference of the motor of the drive shaft at which the wheel is located.

In an embodiment, the determining module includes:

a first determining submodule, configured to acquire the corrected torque value if the equivalent rotating speed difference of the motor of the drive shaft at which the wheel is located is greater than a rotating speed difference threshold.

In an embodiment, the determining module includes:

a second determining submodule, configured to acquire a wheel acceleration change rate of the wheel; and

a third determining submodule, configured to acquire the corrected torque value if the equivalent rotating speed difference of the motor of the drive shaft at which the wheel is located is greater than the rotating speed difference threshold and the wheel acceleration change rate is greater than a wheel acceleration change rate threshold.

In an embodiment, the control module includes:

a first adjustment submodule, configured to control the motor corresponding to the drive shaft to reduce the torque based on the corrected torque value.

In an embodiment, the drive shaft includes a front axle and a rear axle; and the first adjustment submodule includes:

a first adjustment unit, configured to control, when an equivalent rotating speed difference of a motor corresponding to the front axle is greater than the rotating speed difference threshold, the motor of the front axle to reduce a torque based on the corrected torque value, or

controlling, when an equivalent rotating speed difference of a motor corresponding to the rear axle is greater than the rotating speed difference threshold, the motor of the rear axle to reduce a torque based on the corrected torque value, or

controlling, when equivalent rotating speed differences of motors corresponding to the front axle and the rear axle are both greater than the rotating speed difference threshold, the motors of the front axle and the rear axle to reduce torques based on the corrected torque value.

In an embodiment, the first adjustment unit includes:

a first adjustment subunit, configured to control, when the equivalent rotating speed difference of the motor corresponding to the front axle is greater than the rotating speed difference threshold, the motor corresponding to the front axle to reduce the corrected torque value, and determine a rear axle torque incremental value increasable by the motor corresponding to the rear axle; and control, if the rear axle torque incremental value is great than or equal to the corrected torque value, the motor corresponding to the rear axle to increase the corrected torque value, or control, if the rear axle torque incremental value is less than the corrected torque value, the motor corresponding to the rear axle to increase the torque based on the rear axle torque incremental value; and

a second adjustment subunit, configured to control, when the equivalent rotating speed difference of the motor corresponding to the rear axle is greater than the rotating speed difference threshold, the motor corresponding to the rear axle to reduce the corrected torque value, and determine a front axle torque incremental value increasable by the motor corresponding to the front axle; and control, if the front axle torque incremental value is great than or equal to the corrected torque value, the motor corresponding to the front axle to increase the corrected torque value, or control, if the front axle torque incremental value is less than the corrected torque value, the motor corresponding to the front axle to increase the torque based on the front axle torque incremental value.

In an embodiment, the calculation module includes:

a transmission ratio acquisition submodule, configured to acquire a transmission ratio of the wheel to the motor corresponding to the drive shaft; and
an equivalent rotating speed calculation submodule, configured to calculate the equivalent rotating speed of the motor based on the wheel speed of the wheel and the corresponding transmission ratio.

In an embodiment, the determining module includes:
a fourth determining submodule, configured to calculate the corresponding corrected torque value based on the following formula:
$\triangle T_{fl} = k_1 * \triangle \omega_{fl} + k_2 * (\triangle \omega_{fl} - D_1)$, where $k_1$ and $k_2$ are a proportional coefficient and a differential coefficient, $D_1$ is an equivalent rotating speed difference of the motor corresponding to the drive shaft at a previous sampling time, $\triangle \omega_{fl}$ is an equivalent rotating speed difference of the motor corresponding to the drive shaft at a current time, and $\triangle T_{fl}$ is the corrected torque value.
In an embodiment, the determining module includes:

a submodule for acquiring a corrected wheel torque value, configured to acquire a corrected left wheel torque value corresponding to a left wheel connected to the drive shaft, and acquire a corrected right wheel torque value corresponding to a right wheel connected to the drive shaft; and
a fifth determining submodule, configured to determine magnitudes of the corrected left wheel torque value and the corrected right wheel torque value, and take the larger value as the corrected torque value.

In an embodiment, the control module includes:

a torque lower limit value determining submodule, configured to determine a torque lower limit value; and
a second adjustment submodule, configured to control, if a current output torque of the motor corresponding to the drive shaft is less than or equal to the torque lower limit value after the corrected torque value is reduced, the output torque of the motor corresponding to the drive shaft to be the torque lower limit value.

In an embodiment, the torque lower limit value determining submodule includes:

a first torque lower limit value determining unit, configured to determine that the torque lower limit value is 0 when the equivalent rotating speed difference of the motor corresponding to the drive shaft is greater than a first rotating speed difference threshold and less than a second rotating speed difference threshold; the second rotating speed difference threshold being greater than the first rotating speed difference threshold; and
a second torque lower limit value determining unit, configured to determine the torque lower limit value as a torque limit value of motor reversal when the equivalent rotating speed difference of the motor corresponding to the drive shaft is greater than the second rotating speed difference threshold.

In another aspect, an embodiment of the present disclosure discloses an electronic device, including a processor, a memory and a computer program stored in the memory and executable on the processor. The steps of the vehicle torque control method described above are implemented when the computer program is executed by the processor.
In another aspect, an embodiment of the present disclosure discloses a computer-readable storage medium. The computer-readable storage medium stores a computer program. The steps of the vehicle torque control method described above are implemented when the computer program is executed by a processor.
In another aspect, an embodiment of the present disclosure discloses a vehicle. The vehicle includes a front motor, a rear motor and a controller. The controller is configured to implement the steps of the vehicle torque control method described above.
The embodiments of the present disclosure have the following advantages.
According to the present disclosure, an equivalent rotating speed difference of a drive shaft at which a wheel is located can be calculated by a wheel speed of the wheel and a rotating speed of the drive shaft, and whether the shaft at which the wheel is located needs torque reduction can be determined based on the equivalent rotating speed difference, so that the difficulty of calculating a slip ratio is reduced. According to the present disclosure, a torque of a motor of a drive shaft corresponding to a slipping wheel can be adjusted based on a state of the single wheel and a state of the single shaft, so that an adhesion utilization rate of a whole vehicle is improved, thereby improving power performance of the whole vehicle, and avoiding power loss caused by control of torque reduction through the slip ratio.

**BRIEF DESCRIPTION OF THE DRAWINGS**

FIG. 1 is a step flowchart of a vehicle torque control method according to an embodiment of the present disclosure;

FIG. 2 is a step flowchart of a vehicle torque control method according to another embodiment of the present disclosure;

FIG. 3 is a flowchart showing steps of determining slip of a front axle of a vehicle according to an embodiment of the present disclosure;

FIG. 4 is a flowchart showing steps of determining slip of a rear axle of a vehicle according to an embodiment of the present disclosure;

FIG. 5 is a flowchart showing a front axle and rear axle torque control policy according to an embodiment of the present disclosure; and

FIG. 6 is a structural block diagram of a vehicle torque control apparatus according to an embodiment of the present disclosure.

**DETAILED DESCRIPTION**

To make the above objective, features and advantages of the present disclosure clearer and more comprehensible, the present disclosure is further described in detail below with reference to the accompanying drawings and specific implementations.

In the related art, a wheel slip ratio is acquired by a front wheel rotating speed / rear wheel rotating speed / vehicle speed. When the slip ratio is greater than a threshold, a torque of a motor is reduced, to control slip of a vehicle. However, a slip state of a single shaft and a single wheel and requirements for adjusting torques of a front axle motor and a rear axle motor are not considered, which reduces power performance of the whole vehicle. Moreover, the vehicle speed needs to be estimated when the slip ratio is calculated, which increases the difficulty of an algorithm.

One of the core ideas of embodiments of the present disclosure is to calculate, based on an equivalent rotating speed of a wheel speed of a wheel and a rotating speed of a motor of a drive shaft at which the wheel is located, an equivalent rotating speed difference of the motor of the drive shaft at which the wheel is located, calculate a corresponding corrected torque based on the equivalent rotating speed difference, and adjust a torque of the motor of the drive shaft at which a slipping wheel is located based on the corrected torque.

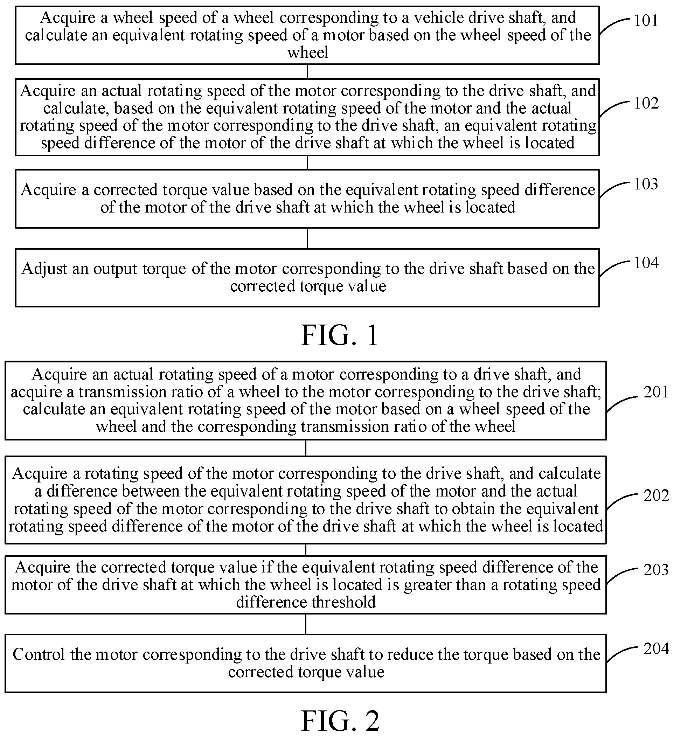

FIG. 1 is a step flowchart of a vehicle torque control method according to an embodiment of the present disclosure, which may specifically include the following steps.

Step 101: A wheel speed of a wheel corresponding to a vehicle drive shaft is acquired, and an equivalent rotating speed of a motor is calculated based on the wheel speed of the wheel.

In the embodiment of the present disclosure, the vehicle may be a four-wheel drive vehicle or a two-wheel drive vehicle. The two front-wheel drive vehicle means that two front wheels or two rear wheels are driven by one motor. Four-wheel drive vehicles may fall into dual-motor drive, three-motor drive and four-motor drive. A dual-motor four-wheel drive vehicle means that one motor drives two front wheels and the other motor drives two rear wheels. A three-motor four-wheel drive vehicle means one motor drives two wheels at a shaft, and two wheels on the other side are driven by two motors. The four-motor four-wheel drive vehicle means two motors drive two front wheels and two motors drive two rear wheels. It should be noted that the examples in the embodiment of the present disclosure are all explained with a dual-motor four-wheel drive vehicle (that is, a front axle drives two wheels by one motor, and a rear axle drives two wheels by the other motor) as an example.

In sensors of the vehicle, a wheel speed sensor has a small number of (usually 8 or 16) teeth of a tooth ring and low resolution (usually 45° or 22.5°), and therefore cannot accurately and effectively identify a rapid and small rotating speed fluctuation, but a motor rotating speed sensor features high resolution (usually about $360°/4096 \approx 0.088°$), and therefore can accurately and effectively identify a small fluctuation. Therefore, the measurement of the motor rotating speed is faster and more accurate than that of the wheel speed. In addition, a torque at the motor end is first transmitted to a speed reducer first and then to left and right wheels through mechanical transmission, there is a certain delay in this process. A changing trend of the wheel speed of the wheel can be predicted in advance by the motor rotating speed, which is more conducive to vehicle control.

Therefore, the wheel speed of each wheel of the vehicle can be collected by the wheel speed sensor, and a transmission ratio between the wheel and the motor can be inquired. Based on the wheel speed of the wheel and the transmission ratio, the equivalent rotating speed of the motor is calculated when the wheel speed of the wheel is equivalent to the rotating speed at the motor end corresponding to the drive shaft.

Step 102: An actual rotating speed of the motor corresponding to the drive shaft is acquired, and an equivalent rotating speed difference of the motor of the drive shaft at which the wheel is located is calculated based on the equivalent rotating speed of the motor and the actual rotating speed of the motor corresponding to the drive shaft.

In the embodiment of the present disclosure, the rotating speed of the motor corresponding to the vehicle drive shaft can be collected by a motor resolver sensor, and a difference between the equivalent rotating speed of the wheel and the rotating speed of the motor corresponding to the drive shaft can be calculated, so that the equivalent rotating speed difference of the motor of the drive shaft at which the wheel is located can be obtained.

Step 103: A corrected torque value is acquired based on the equivalent rotating speed difference of the motor of the drive shaft at which the wheel is located.

Specifically, whether the wheel slips can be determined based on an equivalent shaft speed difference, and then the corrected torque value corresponding to eliminating the equivalent rotating speed difference can be calculated based on the equivalent rotating speed difference and an equivalent rotating speed difference at a previous time.

Step 104: An output torque of the motor corresponding to the drive shaft is adjusted based on the corrected torque value.

In the embodiment of the present disclosure, a torque of a motor of a drive shaft at which a slipping wheel is located can be reduced based on the corrected torque value. In addition, a torque of a motor of a drive shaft at which a non-slipping wheel is located can be increased, thereby avoiding the slip of the wheel.

According to the present disclosure, the equivalent rotating speed difference of the motor of the drive shaft at which a wheel is located can be calculated by a wheel speed of the wheel and a rotating speed of the drive shaft, and whether the shaft at which the wheel is located slips can be determined based on the equivalent rotating speed difference, so as to determine whether the torque needs to be reduced, so that the difficulty of calculating a slip ratio is reduced. According to the present disclosure, a torque of a motor of a drive shaft where a slipping wheel is located can be adjusted based on a state of the single wheel and a state of the single shaft, so that an adhesion utilization rate of a whole vehicle is improved, thereby improving power performance of the whole vehicle, and avoiding power loss caused by torque reduction through the slip ratio.

It can be understood that the wheel speed of the wheel corresponding to the drive shaft mentioned above means the wheel speed of the wheel connected to the drive shaft. The wheel speed of one of wheels connected to the drive shaft may be acquired, or wheel speeds of both wheels may be acquired, and an equivalent rotating speed of the motor corresponding to the wheels is calculated by the wheel speed and is compared with an actual rotating speed of the motor, so that which wheel on the drive shaft slips can be determined.

FIG. 2 is a step flowchart of a vehicle torque control method according to another embodiment of the present disclosure, which may specifically include the following steps.

Step 201: An actual rotating speed of a motor corresponding to a drive shaft is acquired, and a transmission ratio of a wheel to the motor corresponding to the drive shaft is acquired; and an equivalent rotating speed of the motor is calculated based on a wheel speed of the wheel and the corresponding transmission ratio of the wheel.

In an example, wheel speeds of wheels, $\omega_{fl}$, $\omega_{fr}$, $\omega_{rl}$ and $\omega_{rr}$, can be collected by an in-vehicle wheel speed sensor, and the collected wheel speed of each wheel is filtered. A filtering method is not limited to first-order low-pass filtering, mean filtering and Kalman filtering.

A transmission ratio between each wheel and the motor can be inquired, and the equivalent rotating speed of each wheel is calculated by the following formulas (1) and (2):

$$\omega_{fleq} = \omega_{fl} \times i_{fl}, \omega_{freq} = \omega_{fr} \times i_{fr} \quad \text{formula (1)};$$

and

$$\omega_{rleq} = \omega_{rl} \times i_{rl}, \omega_{rreq} = \omega_{rr} \times i_{rr} \quad \text{formula (2)},$$

where $\omega_{fl}$, $\omega_{fr}$, $\omega_{rl}$ and $\omega_{rr}$ denote a left front wheel speed, a right front wheel speed, a left rear wheel speed and a right rear wheel speed respectively, and $i_{fl}$, $i_{fr}$, $i_{rl}$ and $i_{rr}$ denote transmission ratios of a left front wheel, a right front wheel, a left rear wheel and a right rear wheel to a motor respectively. The transmission ratios are greater than 1. $\omega_{fleq}$, $\omega_{freq}$, $\omega_{rleq}$ and $\omega_{rreq}$ denote equivalent rotating speeds of the left front wheel, the right front wheel, the left rear wheel and the right rear wheel respectively.

Step 202: A rotating speed of the motor corresponding to the drive shaft is acquired, and a difference between the equivalent rotating speed of the motor and the actual rotating speed of the motor corresponding to the drive shaft is calculated to obtain the equivalent rotating speed difference of the motor of the drive shaft at which the wheel is located.

In the embodiment of the present disclosure, rotating speeds of corresponding motors can be collected based on the motor resolver sensor. The collected rotating speeds of the front axle motor and the rear axle motor are set to $\omega_{mf}$ and $\omega_{mr}$. The rotating speeds of the motors are filtered. The filtering method is not limited to first-order low-pass filtering, mean filtering and Kalman filtering.

In a non-slip state, a motor is connected to the drive shaft by a differential. According to the principle of an open differential, a relationship between the equivalent rotating speed of the wheel speed of each front wheel and the rotating speed of the motor of the front wheel is shown in formula (3), and a relationship between the equivalent rotating speed of the wheel speed of each rear wheel and the rotating speed of the motor of the rear wheel is shown in formula (4).

$$2\omega_{mf} = \omega_{fleq} + \omega_{freq} \quad \text{formula (3)};$$

and

$$2\omega_{mr} = \omega_{rleq} + \omega_{rreq} \quad \text{formula (4)},$$

where $w_{mf}$ is the rotating speed of the front wheel motor, and $w_{mr}$ is the rotating speed of the rear wheel motor.

Therefore, there is a difference between the rotating speed of a motor and the equivalent rotating speed of the motor when a wheel slips.

The difference between the equivalent rotating speed of the motor and the actual rotating speed of the motor corresponding to the drive shaft is calculated to obtain the equivalent rotating speed difference of the motor of the drive shaft at which the wheel is located, and the equivalent rotating speed differences of the motors of the drive shafts where the left front wheel, the right front wheel, the left rear wheel and the right rear wheel are respectively located are calculated by formulas (5) and (6):

$$\triangle \omega_{fl} = \omega_{fleq} - \omega_{mf}, \triangle \omega_{fr} = \omega_{freq} - \omega_{mf} \quad \text{formula (5)};$$

and

$$\triangle \omega_{rl} = \omega_{rleq} - \omega_{mr}, \triangle \omega_{rr} = \omega_{rreq} - \omega_{mr} \quad \text{formula (6)},$$

where $\triangle\omega_{fl}, \triangle\omega_{fr}, \triangle\omega_{rl}$ and $\triangle\omega_{rr}$ denote the equivalent rotating speed differences of left front wheel, the right front wheel, the left rear wheel and the right rear wheel respectively.

In the present disclosure, whether a wheel slips is determined by the equivalent rotating speed difference of the motor. Compared with the wheel speed sensor, the motor rotating speed sensor can identify vehicle slipping earlier and improve real-time performance and accuracy of control.

Step 203: The corrected torque value is acquired if the equivalent rotating speed difference of the motor of the drive shaft at which the wheel is located is greater than a rotating speed difference threshold.

In the embodiment of the present disclosure, a rotating speed difference threshold may be set based on the rotating speed of the motor of the shaft where the wheel is located. When the equivalent rotating speed difference is greater than the rotating speed difference threshold, it can be determined that the drive shaft where the wheel is located slips and needs to be corrected, and the corrected torque value can be calculated based on the equivalent rotating speed difference.

In an embodiment of the present disclosure, that the corrected torque value is acquired may include: The corresponding corrected torque value is calculated based on the following formula (7):

$$\triangle T_{fl} = k_1 * \triangle \omega_{fl} + k_2 * (\triangle \omega_{fl} - D_1) \quad \text{formula (7)},$$

where $k_1$ and $k_2$ are a proportional coefficient and a differential coefficient and can be obtained by looking up a table, $D_1$ is an equivalent rotating speed difference of the motor corresponding to the drive shaft at a previous sampling time, $\triangle\omega_{fl}$ is an equivalent rotating speed difference of the motor corresponding to the drive shaft at a current time, and $\triangle T_{fl}$ is the corrected torque value.

In an embodiment of the present disclosure, step 103 may include the following substeps S21 and S22.

Substep S21: A wheel acceleration change rate of the wheel is acquired.

Specifically, derivation can be performed based on the wheel speeds of the wheels obtained earlier to obtain accelerations $a_{fl}, a_{fr}, a_{rl}, a_{rr}$ of the wheels, which denote the wheel accelerations of the left front wheel, the right front wheel, the left rear wheel and the right rear wheel respectively, and then the wheel acceleration change rate can be calculated based on the wheel accelerations of the left front wheel, the right front wheel, the left rear wheel and the right rear wheel.

Substep S22: The corrected torque value is acquired if the equivalent rotating speed difference of the motor of the drive shaft at which the wheel is located is greater than the rotating speed difference threshold and the wheel acceleration change rate is greater than a wheel acceleration change rate threshold.

In the embodiment of the present disclosure, whether the motor of the drive shaft where the wheel is located slips may alternatively be determined based on another method, that is, a rotating speed difference threshold can be set based on the rotating speed of the motor of the shaft where the wheel is located.

In an example, rotating speed difference thresholds S1, S2, S5 and S6 (S5>S 1>0, S6>S2>0) and wheel acceleration change rate thresholds A1 and A2 (A1>0, A2>0) are preset. When $S1<\Delta\omega_{fl}<S5$ and $a_{fl}>A1$, it is determined that the left front wheel ordinarily slips, and when $\Delta\omega_{fl}>S5$, it is determined that the vehicle severely slips. When $S2<\Delta\omega_{fr}<S6$ and $a_{fr}>A2$, it is determined that the right front wheel ordinarily slips, and when $\Delta\omega_{fr}>S6$, it is determined that the vehicle severely slips. When the left front wheel or the right front wheel ordinarily or severely slips, it is determined that the front axle slips, otherwise, it is determined that no front axle slips.

In an embodiment of the present disclosure, when $\Delta\omega_{fl}>S5$ and $a_{fl}>A1$, it is determined that the vehicle severely slips, and when $\Delta\omega_{fr}>S6$ and $a_{fr}>A2$, it is determined that the vehicle severely slips.

Rotating speed difference thresholds S3, S4, S7 and S8 (S7>S3>0, S8>S4>0) and wheel acceleration change rate thresholds A3 and A4 (A3>0, A4>0) are preset. When $S3<\Delta\omega_{rl}<S7$ and $a_{rl}>A3$, it is determined that the left rear wheel ordinarily slips, and when $\Delta\omega_{rl}>S7$, it is determined that the vehicle severely slips. When $S4<\Delta\omega_{rr}<S8$ and $a_{rr}>A4$, it is determined that the right rear wheel ordinarily slips, and when $\Delta\omega_{rr}>S8$, it is determined that the vehicle severely slips. When the left rear wheel or the right rear wheel ordinarily or severely slips, it is determined that the rear axle slips, otherwise, it is determined that no rear axle slips.

In an embodiment of the present disclosure, when $\Delta\omega_{rl}>S7$ and $a_{rl}>A3$, it is determined that the vehicle severely slips, and when $\Delta\omega_{rr}>S8$ and $a_{rr}>A4$, it is determined that the vehicle severely slips.

Step 204: The motor correspond to the drive shaft is controlled to reduce the torque based on the corrected torque value.

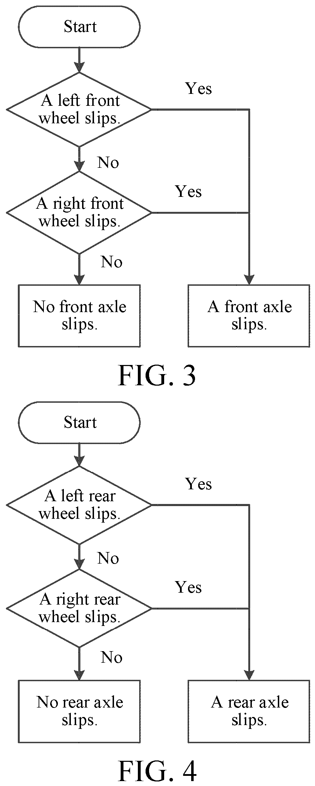

FIG. 3 is a flowchart showing determining of slip of a front axle of a vehicle according to an embodiment of the present disclosure.

In the embodiment of the present disclosure, whether wheels corresponding to a front drive shaft slip can be determined based on a comparison between the equivalent rotating speed difference of the front wheels and the rotating speed difference threshold in step 202. If any wheel at the front drive shaft slips, it is determined that the front drive shaft slips. For example, when $S1<\Delta\omega_{fl}<S5$ and $a_{fl}>A1$, the left front wheel slips, indicating that the front axle slips. When neither of both wheels of the front drive shaft slips, it is determined that no front drive shaft slips. For example, when $\Delta\omega fl<S1$ and $a_{fl}<A1$, and $\Delta\omega_{fr}<S2$ and $a_{fl}<A2$, neither of the left front wheel and the right front wheel slips, indicating that no front axle slips.

FIG. 4 is a flowchart showing determining of slip of a rear axle of a vehicle according to an embodiment of the present disclosure.

In the embodiment of the present disclosure, whether wheels corresponding to a rear drive shaft slip can be determined based on a comparison between the equivalent rotating speed difference of the rear wheels and the rotating speed difference threshold in step 202. If any wheel at the rear drive shaft slips, it is determined that the rear drive shaft slips. For example, when $S3<\Delta\omega_{rl}<S7$ and $a_{rl}>A3$, it is determined that the left rear wheel ordinarily slips, and the rear axle slips. When neither of both wheels of the rear drive shaft slips, it is determined that no front drive shaft slips. For example, when $\Delta\omega_{rl}<S3$ and $a_{rl}<A3$, and $\Delta\omega_{rr}<S4$ and $a_{rr}<A4$, it indicates neither of both wheels of the rear drive shaft slips, and no corresponding rear axle slips.

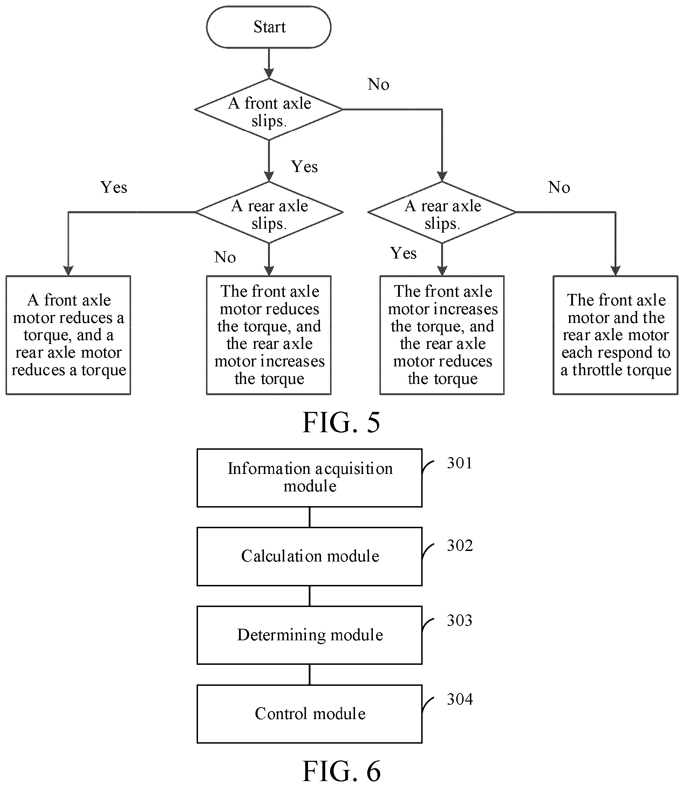

FIG. 5 is a flowchart showing a front axle and rear axle torque control policy according to an embodiment of the present disclosure.

In the embodiment of the present disclosure, when the front drive shaft or the rear drive shaft slips, the torque of the slipping drive shaft is reduced, and the torque of the non-slipping drive shaft is increased. When both the front drive shaft and the rear drive shaft slip, the torques of the front drive shaft and the rear drive shaft are reduced at the same time. When neither of the front drive shaft and the rear drive shaft slips, neither of the torques of the front drive shaft and the rear drive shaft is reduced, and the front drive shaft and the rear drive shaft each respond to a throttle torque.

When it is determined that the motor of the drive shaft where the wheel is located needs to adjust the torque, the motor corresponding to the drive shaft is controlled to reduce the torque. For example, when it is determined that the left front wheel or the right front wheel slips while no wheel at the rear axle slips, the front axle motor reduces the torque by a value that is the corrected torque calculated for the slipping wheel, and the rear axle motor increases the torque by the corresponding value.

When it is determined that the left rear wheel slips or the right rear wheel slips while no wheel at the front axle slips, the rear axle motor reduces the torque by a value that is the corrected torque calculated for the slipping wheel. In an embodiment of the present disclosure, the front axle motor increases the torque by the corresponding value.

In the embodiment of the present disclosure, the torque can be transferred from one end with low adhesion to the other end with high adhesion, that is, the torque of the motor of the drive shaft at which a slipping wheel is located is reduced, and the torque of the motor of the drive shaft at which a non-slipping wheel is located is increased. This avoids a loss of power, and can ensure power of the whole vehicle while restraining the slipping, thereby ensuring power performance of the vehicle.

When it is determined that the left front wheel or the right front wheel slips at the front axle while the left rear wheel or the right rear wheel slips at the rear axle, each of the torques of the front axle motor and the rear axle motor is reduced by a value that is a corrected torque calculated for the slipping wheel. Otherwise, the front axle motor and the rear axle motor each respond to the throttle torque.

In an embodiment of the present disclosure, the drive shaft includes a front axle and a rear axle. Step 204 may include substep S23.

Step S23: When an equivalent rotating speed difference of a motor corresponding to the front axle is greater than the rotating speed difference threshold, the motor of the front axle is controlled to reduce a torque based on the corrected torque value, or when an equivalent rotating speed difference of a motor corresponding to the rear axle is greater than the rotating speed difference threshold, the motor of the rear axle is controlled to reduce a torque based on the corrected torque value, or when equivalent rotating speed differences of motors corresponding to the front axle and the rear axle are both greater than the rotating speed difference threshold, the motors of the front axle and the rear axle are controlled to reduce torques based on the corrected torque value.

In an embodiment of the present disclosure, that when an equivalent rotating speed difference of a motor corresponding to the front axle is greater than the rotating speed difference threshold, the motor of the front axle is controlled to reduce a torque based on the corrected torque value, or that when an equivalent rotating speed difference of a motor corresponding to the rear axle is greater than the rotating speed difference threshold, the motor of the rear axle is controlled to reduce a torque based on the corrected torque value may include:

When the equivalent rotating speed difference of the motor corresponding to the front axle is greater than the rotating speed difference threshold, the motor corresponding to the front axle is controlled to reduce the corrected torque value, and a rear axle torque incremental value increasable by the motor corresponding to the rear axle is determined; and if the rear axle torque incremental value is great than or equal to the corrected torque value, the motor corresponding to the rear axle is controlled to increase the corrected torque value, or if the rear axle torque incremental value is less than the corrected torque value, the motor corresponding to the rear axle is controlled to increase the torque based on the rear axle torque incremental value; or

when the equivalent rotating speed difference of the motor corresponding to the rear axle is greater than the rotating speed difference threshold, the motor corresponding to the rear axle is controlled to reduce the corrected torque value, and a front axle torque incremental value increasable by the motor corresponding to the front axle is determined; and if the front axle torque incremental value is great than or equal to the corrected torque value, the motor corresponding to the front axle is controlled to increase the corrected torque value, or if the front axle torque incremental value is less than the corrected torque value, the motor corresponding to the front axle is controlled to increase the torque based on the front axle torque incremental value.

In the embodiment of the present disclosure, when one of the two drive shafts slips, requirements for a total torque are kept constant by increasing the torque of one of the drive shafts and reducing the torque of the other drive shaft, and the power performance of the vehicle is ensured while the slip is restrained or eliminated.

In an embodiment of the present disclosure, that the corrected torque value is acquired includes:

A corrected left wheel torque value corresponding to a left wheel connected to the drive shaft is acquired, and a corrected right wheel torque value corresponding to a right wheel connected to the drive shaft is acquired. Magnitudes of the corrected left wheel torque value and the corrected right wheel torque value are determined, and the larger value is taken as the corrected torque value, thereby better restraining or eliminating slipping.

In the embodiment of the present disclosure, when both wheels corresponding to the drive shaft are about to slip, corrected wheel torque values of both wheels can be obtained, and the larger one is used as the corrected torque value to adjust the torque of the motor of the drive shaft corresponding to the wheel. For example, when both the left front wheel and the right front wheel slip, the corrected torque value of the left front wheel is 30 N*m, and the corrected torque value of the right front wheel is 40 N*m. In this case, the corrected torque value of the motor on the front axle is 40 N*m.

In an embodiment of the present disclosure, that an output torque of the motor corresponding to the drive shaft is adjusted based on the corrected torque value may include:

A torque lower limit value is determined.

If a current output torque of the motor corresponding to the drive shaft is less than or equal to the torque lower limit value after the corrected torque value is reduced, the output torque of the motor corresponding to the drive shaft is controlled to be the torque lower limit value.

Specifically, a slip state of each wheel may fall into severe slip and ordinary slip. Under different slip states, lower limit values of the output torque of the motor corresponding to the drive shaft are different. For example, in the case of ordinary slip, the lower limit value is 0. In the case of severe slip, the output torque of the motor corresponding to the drive shaft may not be able to balance the equivalent rotating speed difference after being reduced to 0. In this case, the output torque needs to continue to be reduced to a physical limit value of motor reversal. According to the present disclosure, the torque lower limit value can be self-adaptive based on a slipping degree of the vehicle, thereby avoiding a case that the torque can only be adjusted to 0 during severe slip of the vehicle, but the equivalent rotating speed difference of the motor of the drive shaft corresponding to a slipping wheel has not been adjusted well. This improves efficiency of torque adjustment of the motor of the drive shaft corresponding to the slipping wheel.

In an embodiment of the present disclosure, that a torque lower limit value is determined may include:

It is determined that the torque lower limit value is 0 when the equivalent rotating speed difference of the motor corresponding to the drive shaft is greater than a first rotating speed difference threshold and less than a second rotating speed difference threshold. The second rotating speed difference threshold is greater than the first rotating speed difference threshold.

The torque lower limit value is determined as a torque limit value of motor reversal when the equivalent rotating speed difference of the motor corresponding to the drive shaft is greater than the second rotating speed difference threshold.

It should be noted that for simplicity of description, the method embodiments are expressed as a series of action combinations, but a person skilled in the art should be aware that the embodiments of the present disclosure are not limited by the described action sequence, because according to embodiments of the present disclosure, certain steps may be performed in other sequences or simultaneously. A person skilled in the art should also be aware that the embodiments described in the specification are preferred embodiments, and that the actions involved are not necessarily required for embodiments of the present disclosure.

FIG. 6 shows a vehicle torque control apparatus according to the present disclosure, which includes:

an information acquisition module 301, configured to acquire a wheel speed of a wheel corresponding to a vehicle drive shaft, and acquire an actual rotating speed of a motor corresponding to the drive shaft;

a calculation module 302, configured to calculate an equivalent rotating speed of the motor based on the wheel speed of the wheel, and calculate, based on the equivalent rotating speed of the motor and the actual rotating speed of the motor corresponding to the drive shaft, an equivalent rotating speed difference of the motor of the drive shaft at which the wheel is located;

a determining module 303, configured to acquire a corrected torque value based on the equivalent rotating speed difference of the motor of the drive shaft at which the wheel is located; and

a control module 304, configured to adjust an output torque of the motor corresponding to the drive shaft based on the corrected torque value.

In an optional embodiment, the calculation module 302 may include:

an equivalent rotating speed difference calculation submodule, configured to calculate a difference between the equivalent rotating speed of the motor and the actual rotating speed of the motor corresponding to the drive shaft to obtain the equivalent rotating speed difference of the motor of the drive shaft at which the wheel is located.

In an optional embodiment, the determining module 303 may include:

a first determining submodule, configured to acquire the corrected torque value if the equivalent rotating speed difference of the motor of the drive shaft at which the wheel is located is greater than a rotating speed difference threshold.

In an optional embodiment, the determining module 303 may include:

a second determining submodule, configured to acquire a wheel acceleration change rate of the wheel; and

a third determining submodule, configured to acquire the corrected torque value if the equivalent rotating speed difference of the motor of the drive shaft at which the wheel is located is greater than the rotating speed difference threshold and the wheel acceleration change rate is greater than a wheel acceleration change rate threshold.

In an optional embodiment, the control module 304 may include:

a first adjustment submodule, configured to control the motor corresponding to the drive shaft to reduce the torque based on the corrected torque value.

In an optional embodiment, the drive shaft includes a front axle and a rear axle; and the first adjustment submodule may include:

a first adjustment unit, configured to control, when an equivalent rotating speed difference of a motor corresponding to the front axle is greater than the rotating speed difference threshold, the motor of the front axle to reduce a torque based on the corrected torque value, or

control, when an equivalent rotating speed difference of a motor corresponding to the rear axle is greater than the rotating speed difference threshold, the motor of the rear axle to reduce a torque based on the corrected torque value, or

control, when equivalent rotating speed differences of motors corresponding to the front axle and the rear axle are both greater than the rotating speed difference threshold, the motors of the front axle and the rear axle to reduce torques based on the corrected torque value.

In an optional embodiment, the first adjustment unit may include:

a first adjustment subunit, configured to control, when the equivalent rotating speed difference of the motor corresponding to the front axle is greater than the rotating speed difference threshold, the motor corresponding to the front axle to reduce the corrected torque value, and determine a rear axle torque incremental value increasable by the motor corresponding to the rear axle; and control, if the rear axle torque incremental value is great than or equal to the corrected torque value, the motor corresponding to the rear axle to increase the corrected torque value, or control, if the rear axle torque incremental value is less than the corrected torque value, the motor corresponding to the rear axle to increase the torque based on the rear axle torque incremental value; and

a second adjustment subunit, configured to control, when the equivalent rotating speed difference of the motor corresponding to the rear axle is greater than the rotating speed difference threshold, the motor corresponding to the rear axle to reduce the corrected torque value, and determine a front axle torque incremental value increasable by the motor corresponding to the front axle; and control, if the front axle torque incremental value is great than or equal to the corrected torque value, the motor corresponding to the front axle to increase the corrected torque value, or control, if the front axle torque incremental value is less than the corrected torque value, the motor corresponding to the front axle to increase the torque based on the front axle torque incremental value.

In an optional embodiment, the calculation module 302 may include:

a transmission ratio acquisition submodule, configured to acquire a transmission ratio of the wheel to the motor corresponding to the drive shaft; and
an equivalent rotating speed calculation submodule, configured to calculate the equivalent rotating speed of the motor based on the wheel speed of the wheel and the corresponding transmission ratio.

In an optional embodiment, the determining module 303 may include:
a fourth determining submodule, configured to calculate the corresponding corrected torque value based on the following formula:
$\triangle T_{fl} = k_1 {}^* \triangle \omega_{fl} + k_2 {}^* (\triangle \omega_{fl} - D_1)$, where $k_1$ and $k_2$ are a proportional coefficient and a differential coefficient and can be obtained by looking up a table, $D_1$ is an equivalent rotating speed difference of the motor corresponding to the drive shaft at a previous sampling time, $\Delta \omega_{fl}$ is an equivalent rotating speed difference of the motor corresponding to the drive shaft at a current time, and $\triangle T_{fl}$ is the corrected torque value.
In an optional embodiment, the determining module 303 may include:

a submodule for acquiring a corrected wheel torque value, configured to acquire a corrected left wheel torque value corresponding to a left wheel connected to the drive shaft, and acquire a corrected right wheel torque value corresponding to a right wheel connected to the drive shaft; and
a fifth determining submodule, configured to determine magnitudes of the corrected left wheel torque value and the corrected right wheel torque value, and take the larger value as the corrected torque value.

In an optional embodiment, the control module 304 may include:

a torque lower limit value determining submodule, configured to determine a torque lower limit value; and
a second adjustment submodule, configured to control, if a current output torque of the motor corresponding to the drive shaft is less than or equal to the torque lower limit value after the corrected torque value is reduced, the output torque of the motor corresponding to the drive shaft to be the torque lower limit value.

In an optional embodiment, the torque lower limit value determining submodule may include:

a first torque lower limit value determining unit, configured to determine that the torque lower limit value is 0 when the equivalent rotating speed difference of the motor corresponding to the drive shaft is greater than a first rotating speed difference threshold and less than a second rotating speed difference threshold; the second rotating speed difference threshold being greater than the first rotating speed difference threshold; and
a second torque lower limit value determining unit, configured to determine the torque lower limit value as a torque limit value of motor reversal when the equivalent rotating speed difference of the motor corresponding to the drive shaft is greater than the second rotating speed difference threshold.

In another aspect, an embodiment of the present disclosure discloses a computer-readable storage medium. The computer-readable storage medium stores a computer program. The steps of the vehicle torque control method described above are implemented when the computer program is executed by a processor.

In another aspect, an embodiment of the present disclosure discloses an electronic device, including a processor, a memory and a computer program stored in the memory and executable on the processor. The steps of the vehicle torque control method described above are implemented when the computer program is executed by the processor.

In another aspect, an embodiment of the present disclosure discloses a vehicle. The vehicle includes a front motor, a rear motor and a controller. The controller is configured to implement the steps of the vehicle torque control method described above.

Since the apparatus embodiment is substantially similar to the method embodiment, the description is relatively simple. For relevant parts, refer to the description of the method embodiment.

The embodiments in this specification are described in a progressive manner, and the description of each embodiment focuses on differences from other embodiments. Mutual reference may be made to the same and similar parts of the embodiments.

A person skilled in the art should understand that, the embodiments of the present disclosure may be provided as methods, apparatuses, or computer program products. Therefore, the present disclosure may use a form of hardware-only embodiments, software-only embodiments, or embodiments combining software and hardware. In addition, the embodiments of the present disclosure may use a form of a computer program product implemented on one or more computer-usable storage media (including but not limited to a disk memory, a CD-ROM and an optical memory) including computer-usable program code.

The embodiments of the present disclosure are described with reference to flowcharts and/or block diagrams of the method, terminal device (system), and computer program product in the embodiments of the present disclosure. It should be understood that computer program instructions can implement each process and/or block in the flowcharts and/or block diagrams and a combination of processes and/or blocks in the flowcharts and/or block diagrams. These computer program instructions may be provided to a processor of a general purpose computer, a special purpose computer, an embedded processor or other programmable data processing terminal devices to produce a machine, so that the instructions executed by a processor of a computer or other programmable data processing terminal devices are used to produce an apparatus configured to implement functions specified in one or more processes of the flowcharts and/or one or more blocks of the block diagrams.

These computer program instructions may alternatively be stored in a computer-readable memory that can instruct a computer or other programmable data processing terminal devices to operate in a specific manner, so that the instructions stored in the computer-readable memory are used to produce a product including an instruction apparatus, and the instruction apparatus implements functions specified in one or more processes of the flowcharts and/or one or more blocks of the block diagrams.

These computer program instructions may alternatively be loaded on a computer or other programmable data processing terminal devices, so that a series of operation steps are performed on the computer or other programmable terminal devices to produce computer-implemented processing, and therefore the instructions executed on the computer or other programmable terminal devices are used to provide steps for implementing functions specified in one or more processes of the flowcharts and/or one or more blocks of the block diagrams.

Although preferred embodiments in the embodiments of the present disclosure have been described, additional changes and modifications may be made to these embodiments by a person skilled in the art once basic inventive concepts are known. Therefore, the appended claims are intended to be construed to include the preferred embodiments as well as all changes and modifications that fall within the scope of the embodiments of the present disclosure.

Finally, it should be noted that relational terms herein such as "first" and "second" are merely used to distinguish one entity or operation from another entity or operation without necessarily requiring or implying any actual such relationship or order between such entities or operations. Moreover, the terms "include", "comprise" or any other variants thereof are intended to cover non-exclusive inclusion, so that a process, method, article or terminal device including a series of elements not only includes those elements, but also includes those elements that are not explicitly listed, or also includes elements inherent to this process, method, article or terminal device. Without further limitation, the element defined by the sentence "including a..." does not exclude that other identical elements are also present in the process, method, article or terminal device including the elements.

The vehicle torque control method and apparatus, the electronic device, and the storage medium according to the present disclosure are described above in detail. Although the principles and implementations of the present disclosure are described by applying specific examples herein, the descriptions of the above embodiments are merely intended to help understand the method and the core idea of the method according to the present disclosure. In addition, for a person of ordinary skill in the art, changes may be made to the specific implementations and application range based on the idea of the present disclosure. To sum up, the contents of this specification should not be construed as a limitation to the present disclosure.

**Claims**

1. A vehicle torque control method, comprising:

   acquiring a wheel speed of a wheel corresponding to a vehicle drive shaft, and calculating an equivalent rotating speed of a motor based on the wheel speed of the wheel;
   acquiring an actual rotating speed of the motor corresponding to the drive shaft, and calculating, based on the equivalent rotating speed of the motor and the actual rotating speed of the motor corresponding to the drive shaft, an equivalent rotating speed difference of the motor of the drive shaft at which the wheel is located;
   acquiring a corrected torque value based on the equivalent rotating speed difference of the motor of the drive shaft at which the wheel is located; and
   adjusting an output torque of the motor corresponding to the drive shaft based on the corrected torque value.

2. The method according to claim 1, wherein calculating, based on the equivalent rotating speed of the motor and the actual rotating speed of the motor corresponding to the drive shaft, an equivalent rotating speed difference of the motor of the drive shaft at which the wheel is located comprises:
   calculating a difference between the equivalent rotating speed of the motor and the actual rotating speed of the motor corresponding to the drive shaft to obtain the equivalent rotating speed difference of the motor of the drive shaft at which the wheel is located.

3. The method according to claim 1 or 2, wherein acquiring a corrected torque value based on the equivalent rotating speed difference of the motor of the drive shaft at which the wheel is located comprises:
   acquiring the corrected torque value if the equivalent rotating speed difference of the motor of the drive shaft at which the wheel is located is greater than a rotating speed difference threshold.

4. The method according to any one of claims 1 to 3, wherein acquiring a corrected torque value based on the equivalent rotating speed difference of the motor of the drive shaft at which the wheel is located comprises:

   acquiring a wheel acceleration change rate of the wheel; and
   acquiring the corrected torque value if the equivalent rotating speed difference of the motor of the drive shaft at which the wheel is located is greater than the rotating speed difference threshold and the wheel acceleration change rate is greater than a wheel acceleration change rate threshold.

5. The method according to any one of claims 1 to 4, wherein adjusting an output torque of the motor corresponding to the drive shaft based on the corrected torque value comprises:
   controlling the motor corresponding to the drive shaft to reduce the torque based on the corrected torque value.

6. The method according to claim 5, wherein the drive shaft comprises a front axle and a rear axle; and

   controlling the motor corresponding to the drive shaft to reduce the torque based on the corrected torque value comprises:
   controlling, when an equivalent rotating speed difference of a motor corresponding to the front axle is greater than the rotating speed difference threshold, the motor of the front axle to reduce a torque based on the corrected torque value, or
   controlling, when an equivalent rotating speed difference of a motor corresponding to the rear axle is greater than the rotating speed difference threshold, the motor of the rear axle to reduce a torque based on the corrected torque value, or
   controlling, when an equivalent rotating speed differences of motors corresponding to the front axle and the rear axle are both greater than the rotating speed difference threshold, the motors of the front axle and the rear axle to reduce torques based on the corrected torque value.

7. The method according to claim 6, wherein the controlling, when an equivalent rotating speed difference of a motor corresponding to the front axle is greater than the rotating speed difference threshold, the motor of the front axle to reduce a torque based on the corrected torque value, or controlling, when an equivalent rotating speed difference of a motor corresponding to the rear axle is greater than the rotating speed difference threshold, the motor of the rear axle to reduce a torque based on the corrected torque value comprises:

controlling, when the equivalent rotating speed difference of the motor corresponding to the front axle is greater than the rotating speed difference threshold, the motor corresponding to the front axle to reduce the corrected torque value, and determining a rear axle torque incremental value increasable by the motor corresponding to the rear axle; and controlling, if the rear axle torque incremental value is great than or equal to the corrected torque value, the motor corresponding to the rear axle to increase the corrected torque value, or controlling, if the rear axle torque incremental value is less than the corrected torque value, the motor corresponding to the rear axle to increase the torque based on the rear axle torque incremental value; or

controlling, when the equivalent rotating speed difference of the motor corresponding to the rear axle is greater than the rotating speed difference threshold, the motor corresponding to the rear axle to reduce the corrected torque value, and determining a front axle torque incremental value increasable by the motor corresponding to the front axle; and controlling, if the front axle torque incremental value is great than or equal to the corrected torque value, the motor corresponding to the front axle to increase the corrected torque value, or controlling, if the front axle torque incremental value is less than the corrected torque value, the motor corresponding to the front axle to increase the torque based on the front axle torque incremental value.

8. The method according to any one of claims 1 to 7, wherein calculating an equivalent rotating speed of a motor based on the wheel speed of the wheel comprises:

acquiring a transmission ratio of the wheel to the motor corresponding to the drive shaft; and
calculating the equivalent rotating speed of the motor based on the wheel speed of the wheel and the corresponding transmission ratio of the wheel.

9. The method according to any one of claims 1 to 8, wherein acquiring a corrected torque value comprises: calculating the corresponding corrected torque value based on the following formula:
$\triangle T_{fl} k_1 {}^* \triangle \omega_{fl} + k_2 {}^* (\triangle \omega_{fl} - D_1)$, wherein $k_1$ and $k_2$ are a proportional coefficient and a differential coefficient, $D_1$ is an equivalent rotating speed difference of the motor corresponding to the drive shaft at a previous sampling time, $\Delta \omega_{fl}$ is an equivalent rotating speed difference of the motor corresponding to the drive shaft at a current time, and $\triangle T_{fl}$ is the corrected torque value.

10. The method according to any one of claims 1 to 9, wherein acquiring a corrected torque value comprises:

acquiring a corrected left wheel torque value corresponding to a left wheel connected to the drive shaft, and acquiring a corrected right wheel torque value corresponding to a right wheel connected to the drive shaft; and
determining magnitudes of the corrected left wheel torque value and the corrected right wheel torque value, and taking the larger value as the corrected torque value.

11. The method according to any one of claims 1 to 10, wherein adjusting an output torque of the motor corresponding to the drive shaft based on the corrected torque value comprises:

determining a torque lower limit value; and
controlling, if a current output torque of the motor corresponding to the drive shaft is less than or equal to the torque lower limit value after the corrected torque value is reduced, the output torque of the motor corresponding to the drive shaft to be the torque lower limit value.

12. The method according to claim 11, wherein the determining a torque lower limit value comprises:

determining that the torque lower limit value is 0 when the equivalent rotating speed difference of the motor corresponding to the drive shaft is greater than a first rotating speed difference threshold and less than a second rotating speed difference threshold; the second rotating speed difference threshold being greater than the first rotating speed difference threshold; and
determining the torque lower limit value as a torque limit value of motor reversal when the equivalent rotating speed difference of the motor corresponding to the drive shaft is greater than the second rotating speed difference threshold.

**13.** A vehicle torque control apparatus, comprising:

an information acquisition module, configured to acquire a wheel speed of a wheel corresponding to a vehicle drive shaft, and acquire an actual rotating speed of a motor corresponding to the drive shaft;

a calculation module, configured to calculate an equivalent rotating speed of the motor based on the wheel speed of the wheel, and calculate, based on the equivalent rotating speed of the motor and the actual rotating speed of the motor corresponding to the drive shaft, an equivalent rotating speed difference of the motor of the drive shaft at which the wheel is located;

a determining module, configured to acquire a corrected torque value based on the equivalent rotating speed difference of the motor of the drive shaft at which the wheel is located; and

a control module, configured to adjust an output torque of the motor corresponding to the drive shaft based on the corrected torque value.

**14.** An electronic device, comprising a processor, a memory and a computer program stored in the memory and executable on the processor, the steps of the vehicle torque control method according to any one of claims 1 to 12 being implemented when the computer program is executed by the processor.

**15.** A computer-readable storage medium storing a computer program, the steps of the vehicle torque control method according to any one of claims 1 to 12 being implemented when the computer program is executed by a processor.

**16.** A vehicle, comprising a front motor, a rear motor and a controller, the controller being configured to implement the steps of the vehicle torque control method according to each of claims 1 to 12.

Acquire a wheel speed of a wheel corresponding to a vehicle drive shaft, and calculate an equivalent rotating speed of a motor based on the wheel speed of the wheel —101

Acquire an actual rotating speed of the motor corresponding to the drive shaft, and calculate, based on the equivalent rotating speed of the motor and the actual rotating speed of the motor corresponding to the drive shaft, an equivalent rotating speed difference of the motor of the drive shaft at which the wheel is located —102

Acquire a corrected torque value based on the equivalent rotating speed difference of the motor of the drive shaft at which the wheel is located —103

Adjust an output torque of the motor corresponding to the drive shaft based on the corrected torque value —104

# FIG. 1

Acquire an actual rotating speed of a motor corresponding to a drive shaft, and acquire a transmission ratio of a wheel to the motor corresponding to the drive shaft; calculate an equivalent rotating speed of the motor based on a wheel speed of the wheel and the corresponding transmission ratio of the wheel —201

Acquire a rotating speed of the motor corresponding to the drive shaft, and calculate a difference between the equivalent rotating speed of the motor and the actual rotating speed of the motor corresponding to the drive shaft to obtain the equivalent rotating speed difference of the motor of the drive shaft at which the wheel is located —202

Acquire the corrected torque value if the equivalent rotating speed difference of the motor of the drive shaft at which the wheel is located is greater than a rotating speed difference threshold —203

Control the motor corresponding to the drive shaft to reduce the torque based on the corrected torque value —204

# FIG. 2

```
                        ┌─────────────┐
                        │    Start     │
                        └──────┬──────┘
                               │
                               ▼
                          ╱─────────╲              Yes
                        ╱ A left front ╲────────────────────┐
                        ╲ wheel slips. ╱                    │
                          ╲─────────╱                       │
                               │ No                         │
                               ▼                            │
                          ╱─────────╲       Yes             │
                        ╱ A right front╲──────────────┐     │
                        ╲ wheel slips. ╱              │     │
                          ╲─────────╱                 │     │
                               │ No                   │     │
                               ▼                      ▼     ▼
                      ┌──────────────┐        ┌──────────────┐
                      │ No front axle │        │ A front axle │
                      │    slips.     │        │    slips.     │
                      └──────────────┘        └──────────────┘
```

## FIG. 3

```
                        ┌─────────────┐
                        │    Start     │
                        └──────┬──────┘
                               │
                               ▼
                          ╱─────────╲              Yes
                        ╱ A left rear ╲────────────────────┐
                        ╲ wheel slips. ╱                   │
                          ╲─────────╱                      │
                               │ No                        │
                               ▼                           │
                          ╱─────────╲       Yes            │
                        ╱ A right rear ╲──────────────┐    │
                        ╲ wheel slips. ╱              │    │
                          ╲─────────╱                 │    │
                               │ No                   │    │
                               ▼                      ▼    ▼
                      ┌──────────────┐        ┌──────────────┐
                      │ No rear axle │        │ A rear axle  │
                      │    slips.     │        │    slips.     │
                      └──────────────┘        └──────────────┘
```

## FIG. 4

Start

A front axle slips. — No

Yes

A rear axle slips.

A rear axle slips.

Yes

No

No

Yes

A front axle motor reduces a torque, and a rear axle motor reduces a torque

The front axle motor reduces the torque, and the rear axle motor increases the torque

The front axle motor increases the torque, and the rear axle motor reduces the torque

The front axle motor and the rear axle motor each respond to a throttle torque

FIG. 5

| Information acquisition module | 301 |

| Calculation module | 302 |

| Determining module | 303 |

| Control module | 304 |

FIG. 6

## INTERNATIONAL SEARCH REPORT

| International application No. |
|---|
| **PCT/CN2023/093983** |

**A. CLASSIFICATION OF SUBJECT MATTER**

B60L15/20(2006.01)i

According to International Patent Classification (IPC) or to both national classification and IPC

**B. FIELDS SEARCHED**

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNABS; VEN; CNKI: 车, 转矩, 扭矩, 驱动, 电机, 马达, 调整, 调节, 滑移, vehicle, torque, driv+, motor, adjust, skid

**C. DOCUMENTS CONSIDERED TO BE RELEVANT**

| Category* | Citation of document, with indication, where appropriate, of the relevant passages | Relevant to claim No. |
|---|---|---|
| X | CN 210337596 U (NINGDE SHIDAI ELECTRIC TECHNOLOGY CO., LTD.) 17 April 2020 (2020-04-17)<br>    description, paragraphs 0045-0074, and figures 1-2 | 1-16 |
| A | CN 102935815 A (XIANGTAN ELECTRIC MANUFACTURING CO., LTD.) 20 February 2013 (2013-02-20)<br>    entire document | 1-16 |
| A | CN 106809207 A (WUXI NANLIGONG NEW ENERGY ELECTRIC VEHICLE TECHNOLOGY DEVELOPMENT CO., LTD. et al.) 09 June 2017 (2017-06-09)<br>    entire document | 1-16 |
| A | CN 109515206 A (XIAMEN KINGLONG AUTOMOBILE NEW ENERGY TECHNOLOGY CO., LTD.) 26 March 2019 (2019-03-26)<br>    entire document | 1-16 |
| A | CN 112026536 A (CHINA FAW GROUP CO., LTD.) 04 December 2020 (2020-12-04)<br>    entire document | 1-16 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 August 2023** | **01 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 530 119 A1**

**INTERNATIONAL SEARCH REPORT**

| International application No. |
| --- |
| **PCT/CN2023/093983** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 113968139 A (DONGFENG MOTOR COMPANY LIMITED DONGFENG NISSAN PASSENGER VEHICLE COMPANY) 25 January 2022 (2022-01-25)<br>entire document | 1-16 |
| A | US 2013245911 A1 (HONDA MOTOR CO., LTD.) 19 September 2013 (2013-09-19)<br>entire document | 1-16 |

Form PCT/ISA/210 (second sheet) (July 2022)

21

## INTERNATIONAL SEARCH REPORT
### Information on patent family members

International application No.

**PCT/CN2023/093983**

| Patent document cited in search report | | | Publication date (day/month/year) | Patent family member(s) | | | Publication date (day/month/year) |
|---|---|---|---|---|---|---|---|
| CN | 210337596 | U | 17 April 2020 | None | | | |
| CN | 102935815 | A | 20 February 2013 | None | | | |
| CN | 106809207 | A | 09 June 2017 | None | | | |
| CN | 109515206 | A | 26 March 2019 | None | | | |
| CN | 112026536 | A | 04 December 2020 | None | | | |
| CN | 113968139 | A | 25 January 2022 | None | | | |
| US | 2013245911 | A1 | 19 September 2013 | JP | 2013193566 | A | 30 September 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210552589